# EUROPÄISCHE PATENTSCHRIFT

(11) **EP 2 029 386 B1**
(45) Veröffentlichungstag und Bekanntmachung des Hinweises auf die Patenterteilung: **20.08.2014**
(21) Anmeldenummer: 07725509.9
(22) Anmeldetag: 24.05.2007
(51) Int. Cl.: B60L 5/00, H02J 5/00

(54) **ANLAGE ZUR ELEKTRISCHEN ENERGIEÜBERTRAGUNG FÜR SCHIENENGEBUNDENE VORRICHTUNGEN**
UNIT FOR TRANSMITTING ELECTRIC ENERGY FOR RAIL-MOUNTED DEVICES
PROCÉDÉ ET DISPOSITIF POUR FABRIQUER UN MODULE ÉLECTRONIQUE ET MODULE ÉLECTRONIQUE

(30) Priorität: 07.06.2006 DE 102006026773
(43) Veröffentlichungstag der Anmeldung: 04.03.2009
(73) Patentinhaber: SEW-EURODRIVE GmbH & Co. KG, 76646 Bruchsal (DE)
(72) Erfinder: PODBIELSKI, Leobald, 76199 Karlsruhe (DE); BECKER, Günter, 76684 Östringen (DE); SCHMIDT, Josef, 76676 Graben-Neudorf (DE); SCHWESINGER, Klaus, 76646 Bruchsal (DE)
(86) Internationale Anmeldenummer: PCT/EP2007/004609
(87) Internationale Veröffentlichungsnummer: WO 2007/140886

(56) Entgegenhaltungen:
- EP-B1- 0 153 573
- WO-A-01/71882
- DE-A1-102004 031 580
- DE-C1- 10 225 005

## Beschreibung

Die Erfindung betrifft eine Anlage.

Aus der DE 44 46 779 C2 und der WO 92/17929 ist ein Verfahren zur berührungslosen Energieübertragung bekannt, bei denen eine induktiv schwache Kopplung vorliegt.

Aus der DE 20209174 U1 ist eine Weichenanordnung bekannt, bei der vor dem Bereich der Weiche jeder beiden verlegten Primärleiter mit einer Schleife derart verlegt sind, dass während des Durchfahrens der Weiche die Energieversorgung nicht geschwächt wird. Dabei umfasst der Wagen einen E-förmigen Kern, dessen Mittelschenkel im mittleren Bereich zwischen den langgestreckten Primärleitungen gehalten wird.

**Aus der** DE 102 25 005 C1 **ist eine Vorrichtung zur induktiven Übertragung elektrischer Energie bekannt.**

**Aus der** WO 01/71882A **ist eine Elektrohängebahn mit berührungsloser Energieübertragung bekannt.**

**Aus der** DE 10 2004 031580 B4 **ist eine Anordnung zur berührungslosen induktiven Energieübertragung an bewegbare Vorrichtung.**

**Aus der** EP 0 153 573 B1 **ist eine angetriebene Schiebeweiche bekannt.**

Der Erfindung liegt daher die Aufgabe zugrunde, eine komplexe Anlage mit geringem Aufwand herstellbar zu machen.

Erfindungsgemäß wird die Aufgabe bei der Anlage nach den in Anspruch 1 angegebenen Merkmalen gelöst.

Wichtige Merkmale bei der Anlage sind, dass sie ein Primärleitersystem und zumindest eine daran entlang bewegbar angeordnete Vorrichtung umfasst,
wobei die Vorrichtung schienengebunden ausgeführt ist und das Primärleitersystem zumindest entlang der Schienen vorgesehen ist,
wobei die Anlage zumindest ein von einem Antrieb bewegbares Zwischenstück umfasst,
wobei der Antrieb aus einem Transformator versorgt ist, dessen Primärwicklung Teil eines Schwingkreises, insbesondere Teil eines parallelen oder seriellen Schwingkreises, ist.

Das Zwischenstück umfasst dabei ein Schienenteilstück oder ist als solches ausgebildet.

Von Vorteil ist dabei, dass durch die Versorgung des Antriebs über den Transformator aus dem Primärleitersystem keine separate Versorgung des Antriebs notwendig ist. Somit sind Kabel einsparbar bei einer solchen Anlage. Die Streckeninduktivitäten sind mit entsprechenden zur Kompensation vorgesehenen Kapazitäten auf die Mittelfrequenz als Resonanzfrequenz abgeglichen. Durch die Bildung eines Schwingkreises unter Verwendung der Primärwicklung des Transformators wird das Primärleitersystem auch bei Vorsehung des Transformators abstimmbar auf die Mittelfrequenz des Stromes im Primärleitersystem.

Somit sind die bewegbaren Zwischenstücke in der Anlage an beliebigen Stellen vorsehbar und der zugehörige Antrieb ist mit geringem Aufwand an Verkabelung versorgbar.

**Erfindungsgemäß** ist die Sekundärspule mit einer Kapazität derart beschaltet, insbesondere parallel oder in Reihe, dass die zugehörige Resonanzfrequenz der Mittelfrequenz, insbesondere zwischen 5 und 100 kHz, des in das Primärleitersystem eingespeisten Wechselstromes im Wesentlichen entspricht. Von Vorteil ist dabei, dass auch bei großem Luftspalt, also schwacher induktiver Kopplung große Leistungen übertragbar sind. Insbesondere gilt dies für während der Bewegung der Vorrichtung schwankenden Luftspaltwerten.

**Erfindungsgemäß** ist der Schwingkreis in einer Stromschleife des Primärleitersystems angeordnet. Von Vorteil ist dabei, dass das Primärleitersystem nicht verstimmt wird sondern auf die Mittelfrequenz abgestimmt bleibt.

**Erfindungsgemäß** umfasst das Primärleitersystem, insbesondere also auch jeder Streckenabschnitt, einen Hinleiter und einen Rückleiter, insbesondere einen zum Hinleiter parallel verlegten Rückleiter. Von Vorteil ist dabei, dass der Schwingkreis zwischen dem Ende eines Hinleiters und dem Ende eines Rückleiters anordenbar ist.

Bei einer vorteilhaften Ausgestaltung umfasst die Vorrichtung einen eine Sekundärspule umfassenden Übertragerkopf, wobei die Sekundärspule mit dem Primärleitersystem induktiv gekoppelt ist zur berührungslosen Versorgung der Vorrichtung, insbesondere schienengebundenes Fahrzeug wie Einschienenhängebahn oder dergleichen. Von Vorteil ist dabei, dass eine verschleißfreie Versorgung ermöglicht ist und Schleppleitungen oder Schleifleitungen entfallen.

Bei einer vorteilhaften Ausgestaltung entspricht die Resonanzfrequenz des Schwingkreises der Mittelfrequenz des in den Primärleiter eingespeisten Wechselstromes. Von Vorteil ist dabei, dass das Primärleitersystem nicht verstimmt ist, obwohl der Antrieb daraus über den Transformator versorgt ist.

Insbesondere ist hierzu eine Versorgungsschaltung vorgesehen, welche einen Gleichrichter zum Gleichrichten der an der Sekundärspule auftretenden mittelfrequenten Wechselspannung umfasst. An dem Gleichrichter - und gegebenenfalls einem nachgeordneten Glättungskondensator - ist vorzugsweise ein Wechselrichter zur Versorgung des Elektromotors als Stellantrieb für das Bewegbare Zwischenstück vorgesehen. Außerdem ist eine Steuerelektronik hierbei umfasst. Die zugehörige Information ist einerseits von einem zentralen Rechner durch hochfrequente Aufmodulation über das Primärleitersystem an die Steuerelektronik übertragbar. Andererseits sind aber auch spezielle Kabel zur Datenübertragung oder Datenübertragung per Funkwellen realisierbar.

Alternativ weist die bewegbare Vorrichtung selbst eine Informationssendeeinheit auf und die Steuerelektronik eine entsprechende Empfangseinheit. Somit ist die Vorrichtung in der Lage ihren Weg durch die Anlage, insbesondere also auch eine Weichenstellung, zu steuern. Dabei erkennt die Vorrichtung den Ort der Weiche durch ein auf ihr vorgesehenes Positionsmesssystem oder mittels eines Lesegeräts, das einen im Bereich der Weiche angebrachten RFID Tag oder ein äquivalentes Mittel, wie Barcode oder dergleichen, erkennbar und auswertbar macht.

Bei einer vorteilhaften Ausgestaltung ist das bewegbare Zwischenstück linear bewegbar. Von Vorteil ist dabei, dass eine Weiche steuerbar vorsehbar ist, wobei das bewegbare Zwischenstück von einer Weiche umfasst ist.

Bei einer alternativen vorteilhaften Ausgestaltung ist das bewegbare Zwischenstück drehbar. Von Vorteil ist dabei, dass ein Drehteller vorsehbar ist.

Bei einer vorteilhaften Ausgestaltung umfasst das bewegbare Zwischenstück ebenfalls eine Stromschleife aus Hinleiter und Rückleiter. Somit umfasst das Zwischenstück ein Schienenteilstück, dem wiederum ein Primärleitersystem, umfassend Hinleiter und Rückleiter, zugeordnet ist und mit diesem zusammen bewegbar angeordnet ist. Von Vorteil ist dabei, dass die schienengebundene Vorrichtung, insbesondere Fahrzeug, unterbrechungsarm oder-frei versorgbar ist. Also wird das Fahrzeug auch aus dem beweglichen Zwischenstück versorgbar, während es dieses durchfährt.

Bei einer vorteilhaften Ausgestaltung ist der Übertragerkopf entlang eines langgestreckten Primärleiters, insbesondere Hinleiter und/oder Rückleiter, verfahrbar vorgesehen. Von Vorteil ist dabei, dass der Übertragerkopf an einem Wagen anordenbar ist.

Bei einer vorteilhaften Ausgestaltung sind die Primärleiter als Litzenleitungen ausgeführt, also deren einzelne Litzendrähte gegeneinander isoliert. Von Vorteil ist dabei, dass der Skineffekt verringert ist.

Bei einer vorteilhaften Ausgestaltung ist Übertragerkopf für eine Anlage zur berührungslosen Energieübertragung vorgesehen, **wobei** das Gehäuse des Übertragerkopfes eine Sekundärspule samt deren Spulenkern umgibt sowie Kondensatoren zur Bildung einer elektrisch mit der Spule verbundenen Kapazität.

Von Vorteil ist dabei, dass der Übertragerkopf als Einheit montierbar ist und eine gemeinsame Entwärmung der Bauteile vorsehbar ist. Außerdem ist nur ein Gehäuse für alle Bauteile notwendig und diese sind kompakt anordenbar und isolierbar. Weiter wesentlicher Vorteil ist aber auch, dass die auftretenden großen Spannungen, insbesondere beim Reihenschwingkreis, oder großen Ströme, insbesondere beim Parallelschwingkreis, einfach beherrschbar sind und es vermieden wird lange elektrische Leitungen zwischen der Induktivität und der Kapazität zu verlegen, was aufwendig und kostspielig wäre sowie erhöhte Abstrahlungen und Verluste zur Folge hätte. Außerdem wird zum Verbraucher hin nur eine Anschlussleitung vorgesehen, die den Verbraucherstrom und die Verbraucherspannung übertragen muss. Höhere Ströme oder Spannungen, die nur innerhalb oder wegen des parallelen oder seriellen Schwingkreises auftreten, bleiben räumlich innerhalb des Übertragerkopfes. Somit sind die zugehörigen technischen Mittel, wie Stromschienen für Starkstrom und/oder Isoliermittel für hohe Spannungen, innerhalb des Übertragerkopfes, also auf räumlich eng begrenztem Bereich angeordnet. Somit sind die Mittel kompakt ausführbar. Außerdem ist das Gehäuse des Übertragerkopfes zur Isolierung und als Berührschutz mit verwendbar. Des Weiteren ist die Verdrahtung, also die elektrischen Verbindungen und Verbindungsstellen, mit Ausnahme der Anschlussleitung vorsehbar auf diesem räumlich eng begrenzten Gebiet.

Bei einer vorteilhaften Ausgestaltung sind im Übertragerkopf zumindest eine Induktivität und Kapazität als Schwingkreis, insbesondere Parallel- oder Reihen-Schwingkreis, vorgesehen, wobei die Resonanzfrequenz der Mittelfrequenz des Primärstromes im Wesentlichen entspricht. Von Vorteil ist dabei, dass die elektromagnetischen Abstrahlungen und der Aufwand für elektrische Verbindungen verringerbar ist.

Bei einer vorteilhaften Ausgestaltung ist das Gehäuse aus Gehäuseteilen zusammengesetzt, insbesondere dicht, lösbar verbindbar und/oder in hoher Schutzart. Von Vorteil ist dabei, dass der Übertragerkopf auch in feuchter Umgebung oder nasser Umgebung oder sogar Wasser-Umgebung einsetzbar ist. Durch Vergussmasse innerhalb des Übertragekopfes lässt sich eine noch höhere Dichtigkeit und bessere mechanische Stabilität erreichen.

Bei einer vorteilhaften Ausgestaltung ist der Spulenkern aus Ferrit ausgeführt, insbesondere aus einer Vielzahl von Ferritteilen zusammengesetzt ist, insbesondere gleichen Ferritteilen. Von Vorteil ist dabei, dass verschiedene Spulenkerne aus stets denselben Teilen herstellbar sind.. Es ist also eine ganze Baureihe von Spulenkernen oder entsprechend Übertragerköpfen herstellbar, wobei nur eine oder wenige Sorten von Teilen bevorratet werden muss. Die somit hohe erreichbare Varianz innerhalb eines solchen Baukastens benötigt trotzdem nur ein geringes Lagervolumen und entsprechend geringen Aufwand und Kostenbedarf.

Bei einer vorteilhaften Ausgestaltung umfasst der Übertragerkopf eine elektrische Verbindung zu einem Verbraucher, welcher aus dem Übertragerkopf mit Energie versorgbar ist. Von Vorteil ist dabei, dass nur eine einzige Anschlussleitung nach außen zum Verbraucher hin notwendig ist. Somit sind die weiter notwendigen Verbindungsmittel und Verbindungen innerhalb des Übertragerkopfes vorsehbar und mit der Vergussmasse und/oder dem Gehäuse schützbar, isolierbar und mechanisch festlegbar.

Bei einer vorteilhaften Ausgestaltung sind Kondensatoren auf mindestens einer Leiterplatte angeordnet, deren Leiterbahnen elektrisch mit der Sekundärspule verbunden sind. Von Vorteil ist dabei, dass die Verbindungen in einfacher und kostengünstiger Weise herstellbar sind.

Bei einer vorteilhaften Ausgestaltung umgeben die Spulenwicklung oder Spulenwicklungen den Spulenkern und an der äußeren Oberfläche der Spule sind Ferritplatten vorgesehen. Von Vorteil ist dabei, dass eine Verminderung des Streufeldes und somit eine Verbesserung des Wirkungsgrades erreichbar ist.

Bei einer vorteilhaften Ausgestaltung ist der Spulenkern U-förmig, C-förmig oder E-förmig ausgeführt, insbesondere mit an ihrem Ende verbreiterten Schenkeln des U, E oder C. Von Vorteil ist dabei, dass die Erfindung bei verschieden ausführbaren Spulenkernen und somit auch bei verschiedenen Arten der Anordnung der Primärleiter, wie sie beispielhaft in der DE 44 46 779 C2 und der WO 92/17929 gezeigt sind, anwendbar ist. Bei der ersteren ist ein Hinleiter ungefähr im Inneren des U vorgesehen. Bei einem E-förmigen Kern ist im Beriech der ersten beiden Schenkel ein Hinleiter und im Bereich der letzten beiden Schenkel ein Rückleiter vorsehbar.

Bei einer vorteilhaften Ausgestaltung ist zwischen Leiterplatte und Spulenkern ein Isolierkörper vorgesehen. Von Vorteil ist dabei, dass eine räumlich sehr kompakte Anordnung ausführbar ist.

Bei einer vorteilhaften Ausgestaltung ist die Sekundärspule aus Teilwicklungen zusammengesetzt, welche jeweils mit einer zugehörigen Kapazität als Reihenschwingkreis ausgeführt sind, wobei die Resonanzfrequenz der Mittelfrequenz des Primärstromes im Wesentlichen entspricht. Von Vorteil ist dabei, dass bei dem Reihen-Schwingkreis die auftretenden Spannungen reduzierbar sind im Vergleich zur Ausführung des Übertragerkopfes mit nur einer einzigen Induktivität und einer einzigen Kapazität. Bei analoger Ausführung mit Parallelschwingkreis, der aus parallel geschaltete Schwingkreise aus jeweiligen Teilwicklungen und zugehörigen, entsprechend abgestimmten Kapazitäten zusammengesetzt ist, lassen sich entsprechend Ströme reduzieren.

Bei einer vorteilhaften Ausgestaltung ist die Spulenwicklung als Flachwicklung ausgeführt. Von Vorteil ist dabei, dass der Übertragerkopf besonders kompakt ausführbar ist.

Wichtige Merkmale bei der Anlage sind, dass ein vorbeschriebener Übertragerkopf entlang eines langgestreckten Primärleiters verfahrbar vorgesehen ist. Von Vorteil ist dabei, dass eine besonders kompakte Anlage vorsehbar ist, bei der aus einer Einspeisung ein Primärleitersystem speisbar ist, aus dem bewegbar angeordnete Verbraucher berührungslos über eine schwache induktive Kopplung, also auch großen Luftspalt, versorgbar ist.

Bei einer vorteilhaften Ausgestaltung ist der Übertragerkopf entlang eines langgestreckten Primärleiters verfahrbar vorgesehen. Von Vorteil ist dabei, dass Energie an einen bewegbar angeordneten Verbraucher übertragbar ist, also beispielsweise einen elektrischen Antrieb eines Fahrzeuges.

Bei einer vorteilhaften Ausgestaltung weisen die Primärleiter in Richtung der Achse der Spulenwicklung einen Abstand zum Spulenkern auf, der kleiner ist als der Abstand zweier Schenkel des Spulenkerns zueinander. Von Vorteil ist dabei, dass ein hoher Wirkungsgrad erzielbar ist, obwohl die Primärleiter in einer ersten Ebene angeordnet sind, beispielsweise im Boden verlegt sind, und der Übertragerkopf über dieser Ebene ungestört verfahrbar ist. Bei einer vorteilhaften Ausgestaltung ist ein Schnitt des Spulenkerns derart E-förmig, dass ein Mittelschenkel und zwei äußere Schenkel an in einer Ebene angeordneten Rückenteilen vorgesehen ist, insbesondere wobei die Normalenrichtung der Schnittebene in Richtung der langgestreckten Primärleiter verläuft. Von Vorteil ist dabei, dass die Primärleiter jeweils im Bereich zwischen dem äußeren und mittleren Schenkel vorsehbar sind, wobei allerdings der Primärleiter einen Abstand von den Schenkeln aufweist und **der Abstand zwischen Primärleiter und dem die Schenkel verbindenden Teil größer ist als jede Schenkellänge. Bei einem E-förmigen Spulenkern ist das Teil dabei das Rückenteil des E.**

Weitere Vorteile ergeben sich aus den Unteransprüchen.

Die Erfindung wird nun anhand von Abbildungen näher erläutert:

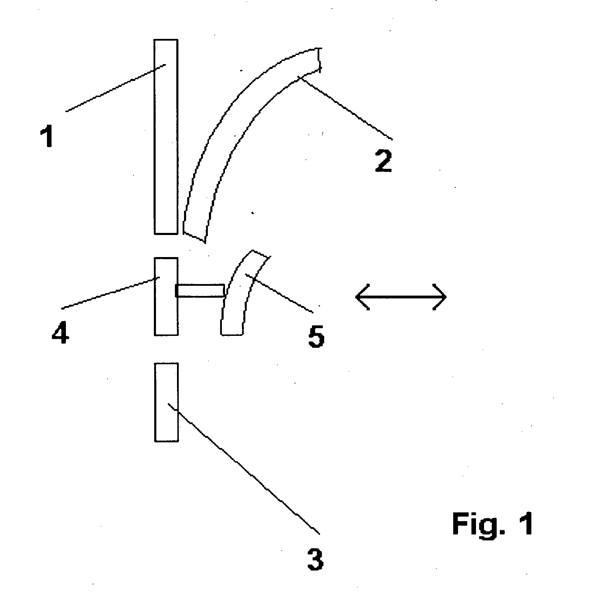

In der Figur 1 ist eine erfindungsgemäße Weiche in Draufsicht gezeigt.

Dabei umfasst die Weiche einen geraden Streckenabschnitt 1 vor dem bewegbaren Zwischenstück. Nach Durchfahren des bewegbaren Zwischenstücks ist ein gekrümmter Streckenabschnitt 2 und ein gerader Streckenabschnitt 3 vorgesehen.

Das bewegbare Zwischenstück umfasst ein gerades Zwischenstück 4 und ein gekrümmtes Zwischenstück 5. Es ist in Pfeilrichtung von einem Stellantrieb M bewegbar. Je nach Stellung durchfahren die Fahrzeuge die Weiche dann vom geraden Abschnitt 3 zum geraden Abschnitt 1 oder zum gekrümmten Abschnitt 2.

Bei der Erfindung handelt es sich eine Anlage mit berührungsloser Energieversorgung. Dabei sind schienengebundene Fahrzeuge bewegbar angeordnet. Die Schienenstrecke ist beispielhaft derart ausgeführt, dass die Fahrzeuge als Einschienenhängebahn ausgeführt sind. Dabei umfassen die Fahrzeuge einen Antrieb, der berührungslos aus einem Primärleiter versorgbar ist, der entlang der Schienenstrecke verlegt ist.

Zur induktiven Kopplung mit dem Primärleitersystem umfassen die Fahrzeuge einen sogenannten Übertragerkopf, der beispielhaft an dem Fahrzeug anbringbar ist. Dieses ist längs einem Primärleiter bewegbar angeordnet, wobei von einer Einspeisung in den Primärleiter ein mittelfrequenter Wechselstrom eingeprägt wird. Die Einspeisung ist vorzugsweise als Stromquelle ausgeführt. Vorzugsweise liegt die Mittelfrequenz zwischen 10 und 100 kHz.

Im Übertragerkopf ist die zugehörige Sekundärwicklung, welche induktiv an den Primärleiter koppelbar ist, vorgesehen. Die Kopplung ist schwach, also über einen großen Luftspalt, ausgeführt. Damit aber trotzdem ein hoher Wirkungsgrad beim berührungslosen Übertragen der elektrischen Leistung vom Primärleitersystem an die Sekundärspule erfolgen kann, ist der Sekundärspule eine Kapazität derart in Serie oder parallel beschaltet, dass der zugehörige Schwingkreis eine Resonanzfrequenz aufweist, die im Wesentlichen der Mittelfrequenz entspricht.

Das Primärleitersystem ist in jedem Streckenabschnitt als Schleife verlegt und umfasst jeweils einen Hinleiter 21 und einen Rückleiter 22.

Der Übertragerkopf weist beispielhaft ein Gehäuse auf, das vorzugsweise aus Metall, wie Aluminium ausgeführt ist. Dieses umgibt den im Wesentlichen E-förmigen Spulenkern und die diesen umgebende Sekundärwicklung. Der Spulenkern ist aus Ferritplatten und Ferritteilen zusammengesetzt. Dabei lässt sich die ungefähre Form des Spulenkerns als E beschreiben, dessen Mittelschenkel nicht verbreitert ist. Jedoch sind die äußeren beiden Schenkel an ihrem Ende verbreitert, indem Ferritplatten am Ende der Schenkel aufgelegt sind. Die äußeren Schenkel sind dabei aus Ferritteilen ausgeführt. Der Mittelschenkel ist durch zwei Ferritteile und eine darauf vorgesehene Ferritplatte ausgeführt.

Am seitlichen Ende des Gehäuses sind an der Innenseite Ferritplatten angebracht, die zur Reduzierung der Streufelder vorgesehen sind und den Wirkungsgrad weiter verbessert.

Die gesamte Anordnung aus Ferritkernen, Ferritteilen und Wicklung ist innerhalb des Gehäuses vorgesehen. Zwischen den mit Kondensatoren bestückten Leiterplatten ist eine Isolierung vorgesehen. Auf den Leiterplatten sind Kondensatoren vorgesehen, die die genannte Kapazität bilden, welche der Induktivität der Sekundärspule in Reihe geschaltet ist.

Dabei sind mehrere Leiterplatte im Inneren vorgesehen und parallel zueinander angeordnet. Vorteilhaft hat es sich erwiesen, entlang zweier Innenseiten jeweils zwei Leiterplatten anzuordnen, wobei die Kondensatoren voneinander abgewandt angeordnet sind.

Mittels einer Dichtung ist eine Gehäuseplatte unter Verwendung von Schrauben auf das Gehäuse aufschraubbar und dicht verbindbar. Das Innere wird zuvor mit Vergussmasse vergossen, wodurch die Wärmeleitung und Isolierung verbesserbar sind.

Am Gehäuse ist auch eine Durchführung der Anschlussleitung vorgesehen. Somit ist ein Verbraucher, wie Elektromotor als Antrieb für das Fahrzeug oder elektronische Schaltung, versorgbar.

Bei weiteren erfindungsgemäßen Ausführungsbeispielen ist die Kapazität parallel statt in Reihe zur Induktivität der Sekundärspule ausgeführt.

Die Wicklung ist aus Hf-Litze hergestellt, also aus Litze, deren sich gegenseitig berührende Einzeldrähte gegeneinander elektrisch isoliert sind. Somit sind die Verluste verringert.

Außerdem ist die Litze als Flachband ausgeführt. Somit eine hoher Wirkungsgrad auf kompaktem Raumbereich erreichbar.

Die Wicklung ist als Flachwicklung, also als ebene konzentrische Wicklung ausgeführt. Dabei verläuft die Wicklung rechteck-spiralförmig. Das heißt, der Wicklungsdraht wird in ungefährer Rechteckform in einer Ebene gewickelt. Somit wird Bauraum eingespart.

Das Aluminiumgehäuse verringert die Verluste und verbessert somit den Wirkungsgrad der Anlage.

Das Primärleitersystem umfasst zumindest einen langgestreckten Hinleiter und Rückleiter, die zu einer geschlossenen Schleife des Primärleitersystems gehören. Beide liegen außerhalb des Übertragekropfes, also insbesondere außerhalb des E-förmigen Spulenkerns. Die beiden Leiter sind dabei in Richtung der längeren Seite des rechteckförmigen Übertragerkopfes verlegt. Der Übertragerkopf wird mit einem gewissen Abstand in Linienrichtung entlang dieser Leiter geführt. Dabei ist der Übertragerkopf einem schienengebundenen Fahrzeug zugeordnet.

Der Hinleiter ist zwischen dem mittleren Schenkel und einem äußeren Schenkel des E-förmigen Spulenkerns vorgesehen. Der Rückleiter ist zwischen dem mittleren Schenkel und dem anderen äußeren Schenkel des E-förmigen Spulenkerns vorgesehen. Zwischen dem Spulenkern und dem Hinleiter und Rückleiter ist ein Abstand vorgesehen. Dieser Abstand ist jedoch kleiner als der Schenkelabstand, also der Abstand vom mittleren zum äußeren Schenkel des E.

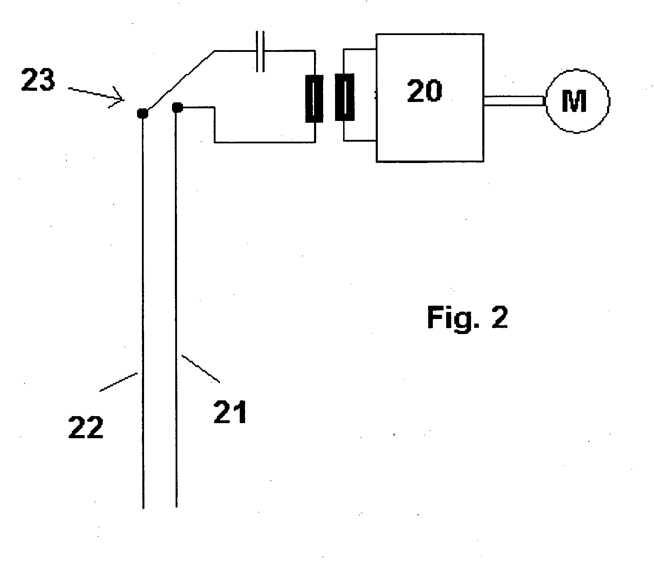

In Figur 2 ist die Versorgung des Stellantriebs der Weiche erläutert. Das Besondere ist hierbei, dass an den Enden 23 der Primärleiter, also des Hinleiters 21 und des Rückleiters 22, kein Kurzschließen mittels einer Verbindungsleitung sondern ein auf die Mittelfrequenz abgestimmter Schwingkreis vorgesehen ist, wobei die Induktivität zur Primärseite eines Transformators gehört. Die Sekundärseite des Transformators ist mit einer Versorgungsschaltung 20 verbunden, die zumindest einen Gleichrichter umfasst.

Das bewegbare Zwischenstück nach Figur 1 ist ebenfalls mit einem Primärleitersystem ausgestattet. Hierzu ist ein Hinleiter und ein Rückleiter in dem geraden und gekrümmten Zwischenstück (4,5) vorgesehen, die über eine Schleppleitung versorgt sind und verbunden sind mit einer Einspeisung oder mit dem Primärleitersystem des Abschnittes 1,2, oder 3. Somit ist das Fahrzeug auch beim Durchfahren der Weiche versorgbar mit Energie. Die Schleppleitung ermöglicht die Versorgung des bewegbare Zwischenstücks und passt sich dabei flexibel an die Position des bewegbaren Zwischenstücks an.

Bei weiteren erfindungsgemäßen Ausführungsbeispiel ist das Schleppkabel ersetzt durch eine induktive Kopplung zwischen dem Primärleitersystem einer der Abschnitte 1,2, oder 3 und dem Primärleitersystem des bewegbaren Zwischenstücks. Somit ist sogar eine verschleißfreie berührungslose Versorgung des Zwischenstücks ermöglicht.

Bei weiteren erfindungsgemäßen Ausführungsbeispiel umfasst die Versorgungsschaltung auch einen Wechselrichter zur Steuerung und gegebenenfalls Regelung des Stellantriebs M.

Bei weiteren erfindungsgemäßen Ausführungsbeispielen ist eine der Kapazitäten oder die Kapazität durch Reihen- und/oder Parallelschaltung mehrerer Kondensatoren realisiert.

Bei weiteren erfindungsgemäßen Ausführungsbeispielen ist statt des im Wesentlichen E-förmigen Spulenkerns auch ein U-förmiger oder ein C-förmiger oder ein anders geformter Ferritkern verwendbar.

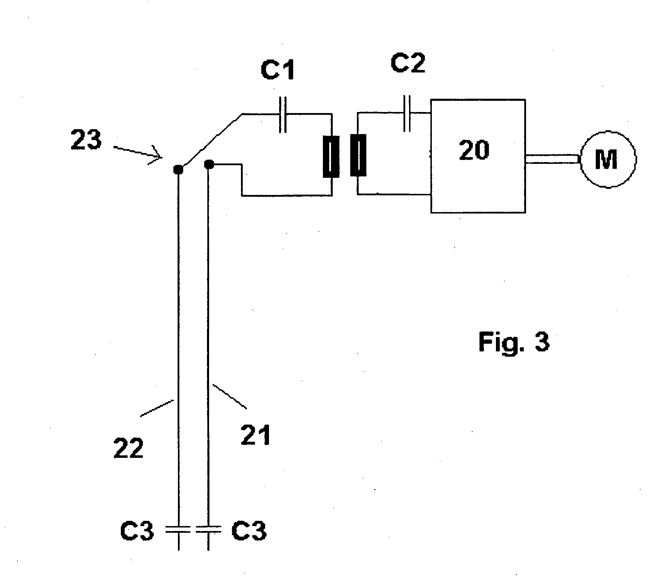

Bei weiteren erfindungsgemäßen Ausführungsbeispielen nach Figur 3 ist primärseitig wiederum die Kapazität C1 zur Kompensation und Abstimmung auf die Mittelfrequenz vorgesehen, wie auch im Ausführungsbeispiel nach Figur 2. Außerdem sind noch in der Anlage Kondensatoren C3 vorgesehen, die zur Kompensation der Streckeninduktivitäten entlang der Primärleiter angebracht sind. Die Kondensatoren bilden mit der jeweils zugehörigen Streckeninduktivität einen Reihenschwingkreis, dessen Resonanzfrequenz auf die Mittelfrequenz abgestimmt ist.

Sekundärseitig ist ein Kondensator C2 vorgesehen, der mit der entsprechenden Transformator-Induktivität eine der Mittelfrequenz im Wesentlichen gleichende Resonanzfrequenz aufweist. Somit muss die Versorgungsschaltung nur noch einen Gleichrichter mit Glättungskondensator umfassen sowie einen nachgeordneten Wechselrichter zum Versorgen und Steuern des Elektromotors M.

Bei einem weiteren erfindungsgemäßen Ausführungsbeispiel kann C1 auch durch eine Änderung des Wertes von C3 vorgesehen werden und muss nicht als separater Kondensator vorgesehen werden.

Bei einem erfindungsgemäßen Ausführungsbeispiel ist wichtig, dass aus dem Primärleitersystem nicht nur das dem Zwischenstück zugeordnete Primärleiterteilsystem, umfassend die mit dem Zwischenstück mitbewegbar angeordneten Hinleiter und Rückleiter, versorgt wird sondern auch der Antrieb zum Bewegen des Zwischenstücks. Bei einer ersten Variante ist dabei der stationär verlegte Hinleiter und Rückleiter des Primärleitersystems durchgeschleift und zusätzlich auch verwendet als Primärleiterteilsystem des Zwischenstücks, wobei bei der Verlegung der zugehörigen Kabel zwischen Zwischenstück und stationärem Teil eine Kabelreserve vorgesehen wird. Bei einer anderen Variante wird das Primärleiterteilsystem mittels einer induktiven Kopplung, also beispielsweise einem Transformator, aus dem Primärleitersystem versorgt, wobei das Primärleiterteilsystem auf dem Zwischenstück durch parallel oder serielles Beschalten mit einem Kondensator auf die Mittelfrequenz des eingespeisten Stromes abgestimmt ist, also die zugehörige Resonanzfrequenz des Primärleiterteilsystems mit dem Kondensator entsprechend abgestimmt ist. Der Transformator ist dabei derart vorsehbar, dass die Sekundärspulenwicklung linear entlang dem Primärleiter bewegbar ist und somit während der Bewegung der Weiche eine Versorgung ermöglicht ist.

In beiden letztgenannten Varianten ist der Antrieb versorgbar aus dem Primärleiterteilsystem des Zwischenstückes entsprechend Figur 2 und 3 mit zugehöriger Beschreibung, wobei dann Bezugszeichen 21, 22 den Hinleiter und Rückleiter des Primärleiterteilsystems betreffen. Alternativ ist aber auch die Versorgung entsprechend Figur 2 und 3 mit zugehöriger Beschreibung, wobei dann Bezugszeichen 21, 22 den Hinleiter und Rückleiter des stationär verlegten Primärleitersystems betreffen, wie oben unter der Beschreibung zu Figuren 2 und 3 beschrieben.

### Bezugszeichenliste

- 1: gerader Streckenabschnitt
- 2: gekrümmter Streckenabschnitt
- 3: gerader Streckenabschnitt
- 4: gerades Zwischenstück
- 5: gekrümmtes Zwischenstück
- 20: Versorgungsschaltung
- 21: Hinleiter
- 22: Rückleiter
- 23: Enden der Primärleiter

## Patentansprüche

1. Anlage, umfassend ein Primärleitersystem und zumindest eine daran entlang bewegbar angeordnete Vorrichtung,
wobei die Vorrichtung schienengebunden ausgeführt ist und das Primärleitersystem zumindest entlang der Schienen vorgesehen ist,
wobei die Anlage zumindest ein von einem Antrieb bewegbares Zwischenstück (4, 5), **das Schienenteilstücke umfasst,** umfasst,
wobei der Antrieb aus einem Transformator versorgt ist, dessen Primärwicklung Teil eines Schwingkreises, insbesondere Teil eines parallelen oder seriellen Schwingkreises, ist,
**wobei die Sekundärwicklung des Transformators mit einer Kapazität derart beschaltet ist, insbesondere parallel oder in Reihe, dass die zugehörige Resonanzfrequenz der Mittelfrequenz, insbesondere eine Frequenz zwischen 5 kHz und 100 kHz, des in das Primärleitersystem eingespeisten Wechselstromes im wesentlichen entspricht,**
**wobei der Schwingkreis in einer Stromschleife des Primärleitersystems angeordnet ist,**
**wobei das Primärleitersystem, insbesondere also auch jeder Streckenabschnitt (1, 2, 3, 4), einen Hinleiter (21) und einen zum Hinleiter (21) parallel verlegten Rückleiter (22) umfasst,**
**wobei der Schwingkreis zwischen dem Ende eines Hinleiters (21) und dem Ende eines Rückleiters (22) angeordnet ist,**
**wobei die Vorrichtung einen eine Sekundärspule umfassenden Übertragerkopf umfasst, wobei die Sekundärspule mit dem Primärleitersystem induktiv gekoppelt ist zur berührungslosen Versorgung der Vorrichtung, insbesondere also eines schienengebundenen Fahrzeugs.**

2. Anlage nach Anspruch 1,
**dadurch gekennzeichnet, dass**
der Schwingkreis ein serieller Schwingkreis ist und der entsprechend zugehörige Kondensator zusätzlich auch zur Kompensation einer Streckeninduktivität zumindest eines Primärleiters vorgesehen ist.

3. Anlage nach Anspruch 1 oder 2,
**dadurch gekennzeichnet, dass**
die Sekundärspule mit einer Kapazität derart beschaltet ist, insbesondere parallel oder in Reihe, dass die zugehörige Resonanzfrequenz der Mittelfrequenz, insbesondere zwischen 5 und 100 kHz, des in das Primärleitersystem eingespeisten Wechselstromes im wesentlichen entspricht.

4. Anlage nach einem der Ansprüche 1 bis 3,
**dadurch gekennzeichnet, dass**
**die Resonanzfrequenz des Schwingkreises der Mittelfrequenz des in das Primärleitersystem eingespeisten Wechselstromes entspricht.**

## Claims

1. System, comprising a primary conductor system and at least one device arranged so as to be movable along said primary conductor system,
wherein the device is of rail-mounted form, and the primary conductor system is provided at least along the rails,
wherein the system comprises at least one intermediate piece (4, 5) which is movable by a drive and which comprises rail sections,
wherein the drive is supplied from a transformer, the primary winding of which is part of an oscillating circuit, in particular part of a parallel or serial oscillating circuit,
wherein the secondary winding of the transformer is connected to a capacitance in such a manner, in particular in parallel or in series, that the associated resonant frequency substantially corresponds to the centre frequency, in particular a frequency between 5 kHz and 100 kHz, of the alternating current fed into the primary conductor system,
wherein the oscillating circuit is arranged in a current loop of the primary conductor system,
wherein the primary conductor system, in particular therefore also each track section (1, 2, 3, 4), comprises a forward conductor (21) and a return conductor (22) laid parallel to the forward conductor (21),
wherein the oscillating circuit is arranged between the end of a forward conductor (21) and the end of a return conductor (22),
wherein the device comprises a pick-up comprising a secondary coil, wherein the secondary coil is inductively coupled to the primary conductor system for contactless supply of the device, in particular therefore of a rail-mounted vehicle.

2. System according to Claim 1,
**characterised in that**
the oscillating circuit is a serial oscillating circuit and the correspondingly associated capacitor is provided additionally also for compensation of a section inductance of at least one primary conductor.

3. System according to Claim 1 or 2,
**characterised in that**
the secondary coil is connected to a capacitance in such a manner, in particular in parallel or in series, that the associated resonant frequency substantially corresponds to the centre frequency, in particular between 5 and 100 kHz, of the alternating current fed into the primary conductor system.

4. System according to one of Claims 1 to 3,
**characterised in that**
the resonant frequency of the oscillating circuit corresponds to the centre frequency of the alternating current fed into the primary conductor system.

## Revendications

1. Installation, comprenant un système de conducteurs primaires et au moins un dispositif disposé le long dudit système de manière à pouvoir se déplacer,
le dispositif étant réalisé guidé sur rails et le système de conducteurs primaires étant prévu au moins le long des rails,
l'installation comprenant au moins une pièce intermédiaire (4, 5) pouvant être déplacée par un entraînement qui comprend des sections de rails,
l'entraînement étant alimenté par un transformateur dont l'enroulement primaire fait partie d'un circuit oscillant, en particulier d'un circuit oscillant parallèle ou série,
l'enroulement secondaire du transformateur étant branché avec une capacité, en particulier en parallèle ou en série, de façon que la fréquence de résonance associée corresponde sensiblement à la moyenne fréquence, en particulier une fréquence comprise entre 5 kHz et 100 kHz, du courant alternatif injecté dans le système de conducteurs primaires,
le circuit oscillant étant disposé dans une boucle de courant du système de conducteurs primaires,
le système de conducteurs primaires, en particulier donc aussi chaque section de ligne (1, 2, 3, 4), comprenant un conducteur aller (21) et un conducteur retour (22) posé parallèlement au conducteur aller (21),
le circuit oscillant étant disposé entre l'extrémité d'un conducteur aller (21) et l'extrémité d'un conducteur retour (22),
le dispositif comprenant une tête de transmission comprenant une bobine secondaire, la bobine secondaire étant couplée au système de conducteurs primaires par induction pour l'alimentation sans contact du dispositif, en particulier donc d'un véhicule guidé sur rails.

2. Installation selon la revendication 1,
**caractérisée en ce que**
le circuit oscillant est un circuit oscillant série et le condensateur associé correspondant est prévu également pour la compensation d'une inductance de ligne d'au moins un conducteur primaire.

3. Installation selon la revendication 1 ou 2,
**caractérisée en ce que**
la bobine secondaire est branchée avec une capacité, en particulier en parallèle ou en série, de façon que la fréquence de résonance associée corresponde sensiblement à la moyenne fréquence, en particulier comprise entre 5 et 100 kHz, du courant alternatif injecté dans le système de conducteurs primaires.

4. Installation selon l'une des revendications 1 à 3,
**caractérisée en ce que**
la fréquence de résonance du circuit oscillant correspond à la moyenne fréquence du courant alternatif injecté dans le système de conducteurs primaires.
